# FASCICULE DE BREVET EUROPEEN

(11) **EP 3 237 346 B1**
(45) Date de publication et mention de la délivrance du brevet: **15.10.2025**
(21) Numéro de dépôt: 15823711.5
(22) Date de dépôt: 22.12.2015
(51) Int. Cl.: C03C 17/22, C03C 17/36

(54) **VITRAGE COMPRENANT UNE COUCHE DE PROTECTION SUPERIEURE A BASE DE CARBONE**
VERGLASUNG MIT EINER KOHLENSTOFFBASIERTEN OBEREN SCHUTZSCHICHT
GLAZING COMPRISING A CARBON-BASED UPPER PROTECTIVE LAYER

(30) Priorité: 23.12.2014 FR 1463257
(43) Date de publication de la demande: 01.11.2017
(73) Titulaire: SAINT-GOBAIN GLASS FRANCE, 92400 Courbevoie (FR)
(72) Inventeur: REYMOND, Vincent, 92160 Antony (FR); SCHMIDT, Uwe, 04895 Falkenberg (DE)
(74) Mandataire: Saint-Gobain Recherche
(86) Numéro de dépôt international: PCT/FR2015/053738
(87) Numéro de publication internationale: WO 2016/102901

(56) Documents cités:
- WO-A1-2009/115596
- WO-A1-2010/139908
- WO-A1-2010/142926
- WO-A2-2006/066101
- US-A1- 2003 143 401
- US-B2- 7 901 781
- CHEN T L ET AL: "Paper;Graphene as an anti-permeation and protective layer for indium-free transparent electrodes;Graphene as an anti-permeation and protective layer for indium-free transparent electrodes", NANOTECHNOLOGY, IOP, BRISTOL, GB, vol. 23, no. 39, 12 September 2012 (2012-09-12), pages 395603, XP020230097, ISSN: 0957-4484, DOI: 10.1088/0957-4484/23/39/395603
- YUDA ZHAO ET AL: "Electronic Supplementary Information for Highly Impermeable and Transparent Graphene as Ultra-Thin Protection Barrier of Ag thin Films", 20 June 2013 (2013-06-20), XP055223864, Retrieved from the Internet <URL:http://www.rsc.org/suppdata/tc/c3/c3tc30743c/c3tc30743c.pdf> [retrieved on 20151027]

## Description

L'invention concerne un matériau et un procédé d'obtention d'un matériau, tel qu'un vitrage, comprenant un substrat transparent revêtu d'un empilement de couches minces agissant sur le rayonnement infrarouge comprenant au moins une couche fonctionnelle.

Les matériaux comprenant des empilements agissant sur le rayonnement infrarouge sont utilisés dans des vitrages dits « de contrôle solaire » visant à diminuer la quantité d'énergie solaire entrante et/ou dans des vitrages dits « bas émissifs » visant à diminuer la quantité d'énergie dissipée vers l'extérieur d'un bâtiment ou d'un véhicule.

Les couches fonctionnelles sont déposées entre des revêtements à base de matériaux diélectriques qui comprennent généralement plusieurs couches diélectriques permettant d'ajuster les propriétés optiques de l'empilement.

On demande actuellement de plus en plus que ces matériaux présentent aussi des caractéristiques esthétiques (qu'ils puissent être galbés), mécaniques (qu'ils soient plus résistants), ou de sécurité (qu'ils ne blessent pas en cas de bris). Cela nécessite de faire subir aux substrats des traitements thermiques. L'empilement de couches minces doit donc être optimisé pour préserver son intégrité et notamment prévenir son altération lors des étapes de transformation diverses telles que des étapes de découpe, de lavage, de façonnage des bords, d'assemblage et/ou de traitements thermiques à température élevée de type trempe, recuit et/ou bombage. Il est courant et pratique de réaliser l'assemblage et/ou les traitements divers sur un lieu autre que celui où est fabriqué le substrat revêtu de l'empilement. Ces substrats subissent donc également des étapes de stockage et de transport.

La résistance mécanique de ces empilements complexes est souvent insuffisante et cela, a fortiori, lorsque les couches fonctionnelles sont des couches métalliques à base d'argent (ou couches d'argent). Cette faible résistance se traduit par l'apparition à court terme de défauts tels que des points de corrosion, des rayures, voire de l'arrachement total ou partiel de l'empilement lors de son utilisation dans des conditions normales. Tous défauts ou rayures, qu'ils soient dus à la corrosion ou à des sollicitations mécaniques, sont susceptibles d'altérer non seulement l'esthétique du substrat revêtu mais également ses performances optiques et énergétiques.

Des couches supérieures de protection sont classiquement utilisées à diverses fins, notamment pour améliorer la résistance aux rayures, la résistance à la corrosion humide et la résistance aux traitements thermiques à température élevée.

Dans le cas des vitrages « contrôle solaire » ou « bas émissifs », on cherche en général à ne pas augmenter significativement l'absorption dans le visible. Cette contrainte doit être prise en compte dans le choix des matériaux constituant l'empilement et notamment des couches de protection supérieures.

On connait par exemple des couches de protection supérieures à base d'oxyde de titane ou d'oxyde mixte de zinc et d'étain. Ces couches supérieures de protection sont peu absorbantes. Cependant, les substrats revêtus de telles couches ne présentent pas une résistance aux rayures suffisante.

Malgré la présence de ces couches de protection, des rayures apparaissent très souvent sur l'empilement. Mais surtout, une fois ces rayures créées sur un substrat, leur visibilité augmente de manière considérable lorsque le substrat est soumis à un traitement thermique de type trempe. L'aptitude à la rayure de tels matériaux est préjudiciable en termes d'esthétisme et de rendement de production. Cela peut entraîner un taux de rebut anormalement élevé, tout particulièrement dans le cas où ces matériaux sont des vitrages bombés/trempés.

Il est également connu d'utiliser des couches de carbone sous forme graphite ou amorphe pour améliorer la résistance aux rayures.

Les couches de carbone amorphe dites DLC (« Diamond-Like-Carbon ») comprennent des atomes de carbone dans un mélange d'état d'hybridation sp2 et sp3. De telles couches ne sont pas déposables par un procédé magnétron classique. Elles sont en général obtenues par dépôt chimique en phase vapeur assisté par un plasma (PECVD), par ablation laser, par pulvérisation par arc ou par dépôt par faisceau d'ion.

Les couches de carbone dites « graphite » comprennent des atomes de carbone essentiellement dans un état d'hybridation sp2. De telles couches augmentent considérablement l'absorption dans le visible et l'infrarouge du matériau les comprenant. Par conséquent, ces couches sont essentiellement utilisées comme couche de protection temporaire destiné à être éliminées lors d'un traitement thermique, par oxydation en dioxyde de carbone.

Les document US2003/0143401 et WO2009/115596 divulguent un substrat transparent d'un revêtement de couches comprenant une couche temporaire de protection à base de carbone. La couche de carbone est éliminée lorsque le substrat est trempé.

Le document WO 2010/142926 divulgue un procédé d'obtention d'un substrat revêtu d'un empilement bas-émissif comprenant un traitement par rayonnement laser. L'empilement comprend avant traitement comprend une couche mince absorbant au moins partiellement le rayonnement laser qui peut être une couche de carbone.

Il existe un besoin de protéger efficacement les substrats revêtus d'empilements agissant sur le rayonnement infrarouge comprenant des couches fonctionnelles à base d'argent pendant les étapes de fabrication, de transformation, de transport et/ou de stockage. Il existe également un besoin d'améliorer la résistance aux rayures des substrats revêtus d'empilement agissant sur le rayonnement infrarouge sans modifier les propriétés optiques telles que l'absorption dans le visible.

Le demandeur a découvert de manière surprenante que l'utilisation d'une couche de protection supérieure à base de carbone de type graphite, d'épaisseur inférieure à 1 nm, déposée par pulvérisation cathodique permet d'obtenir une protection à la rayure suffisante.

La résistance aux rayures est améliorée sans modifier les propriétés optiques telles que l'absorption dans le visible. Un matériau comprenant un substrat ainsi revêtu et protégé peut avantageusement indifféremment être utilisé, trempé ou non trempé, même dans des applications nécessitant une transmission lumineuse dans le visible élevée.

L'invention concerne un matériau comprenant un substrat transparent revêtu d'un empilement de couches minces agissant sur le rayonnement infrarouge comprenant au moins une couche fonctionnelle selon la revendication 1.

Contrairement aux couches de carbone amorphe de type DLC, cette fine couche de carbone est déposée par simple pulvérisation cathodique. Cette couche de protection anti-rayure permet d'améliorer très significativement la résistance à la rayure tout en étant facile à déposer et à bas coût.

Pour améliorer la résistance à la rayure, les solutions classiques consistent à utiliser des couches dites « dures » qui sont des couches comprenant des matériaux qui présentent une dureté élevée tels que l'oxyde de titane ou le carbone amorphe de type DLC.

La couche de protection selon l'invention se distingue nettement de ces couches dites « dures ». Les mécanismes sous-jacents permettant l'obtention d'une bonne protection à la rayure semblent reposer non pas sur la dureté mais sur l'abaissement du coefficient de frottement. La couche de protection assure la fonction de couche anti-friction.

Cet effet est facilement observé en frottant légèrement avec un chiffon ou papier la surface du substrat revêtu de l'empilement. En l'absence de la couche de protection selon l'invention, la surface supérieure de l'empilement « accroche ». Lorsque l'empilement comprend une couche de protection selon l'invention, la surface est « glissante ».

Ces résultats sont confirmés par des mesures tribologiques réalisées avec un indenteur polymérique à base de polypropylène. L'utilisation d'un indenteur polymérique est intéressante car cela permet en plus de rendre compte des phénomènes de frottement pouvant intervenir lors des étapes de transport.

En effet, les matériaux sont en général transportés à l'aide de charriots à harpe. Ces charriots à harpe comprennent des cordes métalliques revêtues d'une gaine polymérique contre lesquelles les matériaux sont maintenus. Les contacts entre ces cordes et l'empilement, pouvant intervenir lors de l'insertion des matériaux et/ou lors de leur transport, représentent une des causes principales de la génération de rayures.

Ces mesures tribologiques ont montré que le coefficient de frottement du couple Indenteur polymérique / Matériau revêtu de l'empilement est abaissé lorsque l'empilement comprend une couche de protection selon l'invention. L'amélioration de la résistance à la rayure semble pouvoir être reliée à cette diminution du coefficient de frottement.

La couche de protection supérieure à base de carbone utilisée comprend des atomes de carbone formant des liaisons carbone-carbone essentiellement dans un état d'hybridation sp2. On considère que les atomes de carbone de la couche sont essentiellement dans un état d'hybridation sp2 quand au moins 80 %, au moins 90 %, voire au moins 100 % des atomes de carbone sont dans un état d'hybridation sp2. L'hybridation des atomes de carbone peut-être caractérisée par spectroscopie infrarouge à transformée de Fourier (FTIR).

La couche de carbone selon l'invention diffère de par cette caractéristique des couches dites DLC qui sont des couches de carbone amorphe éventuellement hydrogéné comprenant des atomes de carbone dans un mélange d'état d'hybridation sp2 et sp3, de préférence essentiellement sp3. Les atomes de carbone ne sont pas essentiellement dans un état d'hybridation sp2.

La couche de protection supérieure à base de carbone comprend au moins 95,0 %, de préférence au moins 96,5 % et mieux au moins 98,0 % en masse de carbone par rapport à la masse de la couche de protection supérieure.

La couche de protection supérieure de carbone selon l'invention peut être obtenue par pulvérisation cathodique assistée par champ magnétique, par exemple à l'aide d'une cible de graphite. L'atmosphère dans l'enceinte de dépôt comprend un gaz neutre, de préférence de l'argon.

Selon un mode de réalisation, la couche de protection supérieure a une épaisseur :
- inférieure à 1,0 nm, inférieure ou égale à 0,9 nm, inférieure à 0,8 nm et/ou
- supérieure ou égale à 0,1 nm, supérieure ou égale à 0,2 nm, supérieure ou égale à 0,5 nm.

Selon un mode de réalisation avantageux, la couche de protection supérieure a une épaisseur strictement inférieure à 1,0 nm, de préférence comprise entre 0,2 et 0,8 nm. Ces fines couches de carbone ne modifient pas significativement l'absorption dans le visible. Ces couches ne doivent pas être nécessairement éliminées même lorsque l'on recherche des transmissions lumineuses dans le visible élevées.

La couche de protection selon l'invention apporte une amélioration significative de la résistance à la rayure par rapport à des couches de protection classiques à base de dioxyde de titane (TiO₂), d'oxyde mixte de zinc et d'étain (SnZnOx). Cependant, selon un mode de réalisation avantageux, l'empilement comprend en outre une couche de protection inférieure à base de métaux choisis parmi le titane, le zinc, l'étain, le zirconium et/ou le hafnium, ces métaux étant sous forme métallique, oxydée, nitrurée ou oxynitrurée. Cette couche de protection inférieure peut être choisie parmi une couche :
- de titane ; de zirconium ; d'hafnium ; de titane et de zirconium ; de titane, de zirconium et d'hafnium ; de zinc et d'étain ;
- de nitrure de titane ; de nitrure de zirconium ; de nitrure d'hafnium ; de nitrure de titane et de zirconium ; de nitrure de titane, de zirconium et d'hafnium ;
- d'oxyde de titane ; d'oxyde de zirconium ; d'oxyde d'hafnium ; d'oxyde de titane et de zirconium ; d'oxyde de titane, de zirconium et d'hafnium ; d'oxyde de zinc et d'étain.

La couche de protection inférieure a une épaisseur :
- inférieure ou égale à 10 nm, inférieure ou égale à 7 nm, inférieure ou égale à 5 nm, ou inférieure ou égale à 4 nm et/ou
- supérieure ou égale à 1 nm, supérieure ou égale à 2 nm ou supérieure ou égale à 3 nm.

La couche de protection inférieure est de préférence au-contact de la couche de protection supérieure.

La variation de l'absorption lumineuse dans le visible Δabs induite par la couche de protection supérieure est inférieure à 10 %, de préférence inférieure à 5 % et mieux inférieure à 2 %. La variation est obtenue en mesurant l'absorption lumineuse d'un substrat revêtu d'un empilement ne comprenant pas de couche de protection supérieure (Abs. réf) et d'un même substrat revêtu comprenant la couche protection supérieure (Abs Inv) puis en réalisant le calcul suivant : ΔAbs = (Abs réf - Abs inv).

Toutes les caractéristiques lumineuses présentées dans la présente description sont obtenues selon les principes et méthodes décrits dans la norme européenne EN 410 se rapportant à la détermination des caractéristiques lumineuses et solaires des vitrages utilisés dans le verre pour la construction. Par Abs., on entend au sens de la présente description l'absorption à incidence normale, sous l'illuminant D65 avec un champ de vision de 2°.

L'utilisation d'une couche supérieure de protection présentant une faible épaisseur conduit à d'excellentes propriétés de résistance aux rayures tout en maintenant l'absorption dans le visible faible.

L'empilement est déposé par pulvérisation cathodique assistée par un champ magnétique (procédé magnétron). Selon ce mode de réalisation avantageux, toutes les couches de l'empilement sont déposées par pulvérisation cathodique assistée par un champ magnétique.

Sauf mention contraire, les épaisseurs évoquées dans le présent document sont des épaisseurs physiques et les couches sont des couches minces. On entend par couche mince, une couche présentant une épaisseur comprise entre 0,1 nm et 100 micromètres.

Dans toute la description le substrat selon l'invention est considéré posé horizontalement. L'empilement de couches minces est déposé au-dessus du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une ou plusieurs couches intercalées entre ces deux couches.

La couche fonctionnelle est choisie parmi :
- une couche fonctionnelle métallique à base d'argent ou d'un alliage métallique contenant de l'argent,
- une couche fonctionnelle métallique à base de niobium,
- une couche fonctionnelle à base de nitrure de niobium.

Les couches fonctionnelles sont de préférence des couches fonctionnelles métalliques à base d'argent.

Une couche fonctionnelle métallique à base d'argent comprend au moins 95,0 %, de préférence au moins 96,5 % et mieux au moins 98,0 % en masse d'argent par rapport à la masse de la couche fonctionnelle. De préférence, la couche métallique fonctionnelle à base d'argent comprend moins de 1,0 % en masse de métaux autres que de l'argent par rapport à la masse de la couche métallique fonctionnelle à base d'argent.

L'épaisseur des couches fonctionnelles, avantageusement à base d'argent est par ordre de préférence croissant comprise de 5 à 20 nm, de 8 à 15 nm.

Les couches fonctionnelles telles que par exemple en argent sont déposées entre des revêtements à base de matériaux diélectriques qui comprennent généralement plusieurs couches diélectriques permettant d'ajuster les propriétés optiques de l'empilement. Ces couches diélectriques permettent en outre de protéger la couche fonctionnelle avantageusement en argent des agressions chimiques ou mécaniques. L'empilement de couches minces comprend donc avantageusement au moins une couche métallique fonctionnelle avantageusement à base d'argent, au moins deux revêtements à base de matériaux diélectriques, chaque revêtement comportant au moins une couche diélectrique, de manière à ce que chaque couche métallique fonctionnelle soit disposée entre deux revêtements à base de matériaux diélectriques.

Les revêtements à base de matériaux diélectriques présentent une épaisseur supérieure à 15 nm, de préférence comprise entre 15 et 50 nm et mieux de 30 à 40 nm.

Les couches diélectriques des revêtements à base de matériaux diélectriques présentent les caractéristiques suivantes seules ou en combinaison :
- elles sont déposées par pulvérisation cathodique assistée par champ magnétique,
- elles sont choisies parmi les couches diélectriques à fonction barrière ou à fonction stabilisante,
- elles sont choisies parmi les oxydes ou nitrures d'un ou plusieurs éléments choisi(s) parmi le titane, le silicium, l'aluminium, l'étain et le zinc,
- elles ont une épaisseur supérieure à 5 nm, de préférence comprise entre 8 et 35 nm.

On entend par couches diélectriques à fonction barrière, une couche en un matériau apte à faire barrière à la diffusion de l'oxygène et de l'eau à haute température, provenant de l'atmosphère ambiante ou du substrat transparent, vers la couche fonctionnelle. Les couches diélectriques à fonction barrière peuvent être à base de composés de silicium et/ou d'aluminium choisis parmi les oxydes tels que SiO₂, les nitrures tels que les nitrure de silicium Si₃N₄ et les nitrures d'aluminium AIN, et les oxynitrures SiOₓN_{y}, éventuellement dopé à l'aide d'au moins un autre élément. Les couches diélectriques à fonction barrière peuvent également être à base à base d'oxyde de zinc et d'étain.

On entend par couches diélectriques à fonction stabilisante, une couche en un matériau apte à stabiliser l'interface entre la couche fonctionnelle et cette couche. Les couches diélectriques à fonction stabilisante sont de préférence à base d'oxyde cristallisé, notamment à base d'oxyde de zinc, éventuellement dopé à l'aide d'au moins un autre élément, comme l'aluminium. La ou les couches diélectriques à fonction stabilisante sont de préférence des couches d'oxyde de zinc.

La ou les couches diélectriques à fonction stabilisante peuvent se trouver au-dessus et/ou en-dessous d'au moins une couche métallique fonctionnelle à base d'argent ou de chaque couche métallique fonctionnelle à base d'argent, soit directement à son contact ou soit séparées par une couche de blocage.

Selon un mode de réalisation avantageux, l'empilement comprend une couche diélectrique à base de nitrure de silicium et/ou d'aluminium située au-dessus d'au moins une partie de la couche fonctionnelle. La couche diélectrique à base de nitrure de silicium et/ou d'aluminium a une épaisseur :
- inférieure ou égale à 100 nm, inférieure ou égale à 50 nm ou inférieure ou égale à 40 nm, et/ou
- supérieure ou égale à 15 nm, supérieure ou égale à 20 nm ou supérieure ou égale à 25 nm.

La couche diélectrique à base de nitrure de silicium et/ou d'aluminium est en-dessous de la couche de protection supérieure.

Selon un mode de réalisation, la couche diélectrique à base de nitrure de silicium et/ou d'aluminium est en-dessous de la couche de protection inférieure, de préférence, au-contact de la couche de protection inférieure.

La couche de protection supérieure est de préférence la dernière couche de l'empilement, c'est-à-dire la couche la plus éloignée du substrat revêtu de l'empilement.

Les empilements peuvent comprendre en outre des couches de blocage dont la fonction est de protéger les couches fonctionnelles en évitant une éventuelle dégradation liée au dépôt d'un revêtement à base de matériaux diélectriques ou liée à un traitement thermique. Selon un mode de réalisation, l'empilement comprend au moins une couche de blocage située en-dessous et au-contact d'une couche métallique fonctionnelle à base d'argent et/ou au moins une couche de blocage située au-dessus et au-contact d'une couche métallique fonctionnelle à base d'argent.

Parmi les couches de blocage traditionnellement utilisées notamment lorsque la couche fonctionnelle est une couche métallique à base d'argent, on peut citer les couches de blocage à base d'un métal choisi parmi le niobium Nb, le tantale Ta, le titane Ti, le chrome Cr ou le nickel Ni ou à base d'un alliage obtenu à partir d'au moins deux de ces métaux, notamment d'un alliage de nickel et de chrome (NiCr).

L'épaisseur de chaque surcouche ou sous-couche de blocage est de préférence :
- d'au moins 0,5 nm ou d'au moins 0,8 nm et/ou
- d'au plus 5,0 nm ou d'au plus 2,0 nm.

Un exemple d'empilement convenant selon l'invention comprend :
- un revêtement à base de matériaux diélectriques situé en-dessous de la couche métallique fonctionnelle à base d'argent, le revêtement pouvant comprendre au moins une couche diélectrique à base de nitrure de silicium et/ou d'aluminium,
- éventuellement une couche de blocage,
- une couche métallique fonctionnelle à base d'argent,
- éventuellement une couche de blocage,
- un revêtement à base de matériaux diélectriques situé au-dessus de la couche métallique fonctionnelle à base d'argent, le revêtement pouvant comprendre au moins une couche diélectrique à base de nitrure de silicium et/ou d'aluminium,
- éventuellement une couche de protection inférieure,
- une couche de protection supérieure.

Les substrats transparents selon l'invention sont de préférence en un matériau rigide minéral, comme en verre, notamment silico-sodo-calcique ou organiques à base de polymères (ou en polymère).

Les substrats transparents organiques selon l'invention peuvent également être en polymère, rigides ou flexibles. Des exemples de polymères convenant selon l'invention comprennent, notamment :
- les polyesters tels que le polyéthylène téréphtalate (PET), le polybutylène téréphtalate (PBT), le polyéthylène naphtalate (PEN) ;
- les polyacrylates tels que le polyméthacrylate de méthyle (PMMA) ;
- les polycarbonates ;
- les polyuréthanes ;
- les polyamides ;
- les polyimides ;
- les polymères fluorés comme les fluoroesters tels que l'éthylène tétrafluoroéthylène (ETFE), le polyfluorure de vinylidène (PVDF), le polychlorotrifluorethylène (PCTFE), l'éthylène de chlorotrifluorethylène (ECTFE), les copolymères éthylène-propylène fluores (FEP) ;
- les résines photoréticulables et/ou photopolymérisables, telles que les résines thiolène, polyuréthane, uréthane-acrylate, polyester-acrylate et
- les polythiouréthanes.

L'épaisseur du substrat varie généralement entre 0,5 mm et 19 mm. L'épaisseur du substrat est de préférence inférieure ou égale à 6 mm, voire 4 mm.

Le matériau, c'est-à-dire le substrat transparent revêtu de l'empilement, n'est donc pas traité thermiquement, mails il peut être destiné à subir un traitement thermique à température élevée choisi parmi un recuit, par exemple par un recuit flash tel qu'un recuit laser ou flammage, une trempe et/ou un bombage. La température du traitement thermique est supérieure à 400 °C, de préférence supérieure à 450 °C, et mieux supérieure à 500 °C. La mise en œuvre ou non d'un traitement thermique sur la matériau selon l'invention dépendra de l'application à laquelle ledit matériau est destiné. Les propriétés du matériau selon l'invention, démontrées ici, à savoir la résistance aux rayures, sont indépendantes d'un quelconque traitement thermique. Le substrat revêtu de l'empilement, formant le matériau selon l'invention, peut donc être bombé et/ou trempé. On dit qu'il est trempable et/ou bombable.

Le substrat revêtu de l'empilement peut être est un verre bombé et/ou trempé.

Le matériau peut être sous forme de vitrage monolithique, de vitrage feuilleté ou d'un vitrage multiple notamment un double-vitrage ou un triple vitrage.

L'invention concerne également un procédé de préparation d'un matériau comprenant un substrat transparent revêtu d'un empilement de couches minces déposées par pulvérisation cathodique éventuellement assistée par champ magnétique, le procédé comporte la séquence d'étapes suivantes :
- on dépose sur le substrat transparent au moins une couche fonctionnelle, puis
- on dépose au moins une couche diélectrique à base de nitrure de silicium et/ou d'aluminium au-dessus de la couche fonctionnelle, puis
- on dépose éventuellement une couche de protection inférieure,
- on dépose une couche de protection supérieure à base de carbone au sein de laquelle les atomes de carbone sont essentiellement dans un état d'hybridation sp2, par pulvérisation d'une cible de carbone, de préférence de graphite, la couche de protection supérieure présente une épaisseur inférieure à 1 nm.

Le procédé peut comprendre en outre l'étape pendant laquelle on soumet le substrat revêtu de l'empilement de couches minces à un traitement thermique à une température supérieure à 400 °C, de préférence 500 °C.

Enfin, l'invention concerne l'utilisation d'un matériau tel que décrit précédemment pour fabriquer un vitrage. Il peut s'agir par exemple d'un vitrage de bâtiment ou de véhicule.

### Exemples

Des empilements de couches minces définis ci-après sont déposés sur des substrats en verre sodo-calcique clair d'une épaisseur de 4 mm.

Pour ces exemples, les conditions de dépôt des couches déposées par pulvérisation (pulvérisation dite « cathodique magnétron ») sont résumées dans le tableau 1 ci-dessous.

La couche de carbone de type graphite est déposée par pulvérisation magnétron d'une cible de graphite sous atmosphère comprenant de l'argon à une faible puissance d'environ 10 kW.

| **Tableau 1** | **Cibles employées** | **Pression dépôt** | **Gaz** | **Indice*** |
|---|---|---|---|---|
| Si₃N₄ | Si:Al (92:8 % en pds) | 2-15*10⁻³ mbar | Ar:30-60 % - N₂:40-70 % | 2,00 |
| AZO | Zn:Al (2% en pds) | 1.5*10⁻³ mbar | Ar 91% - O₂ 9% | 1,90 |
| NiCr | Ni:Cr (80:20 % at.) | 1-5*10⁻³ mbar | Ar à 100 % | - |
| Ag | Ag | 2-3*10⁻³ mbar | Ar à 100 % | - |
| TiO₂ | TiOx | 1,5*10⁻³ mbar | Ar 88 % - O₂ 12 % | 2,32 |
| C | Graphite | 1,5*10⁻³ mbar | Ar 100 % | 2.25 |

| | | | | |
|---|---|---|---|---|
| at. : atomique ; pds : poids ; * : à 550 nm. | | | | |

Les substrats revêtus d'empilements protégés selon l'invention sont trempables et bombables.

| **Vitrage** | | **Inv. 1** | **Inv.2** | **Comp.** |
|---|---|---|---|---|
| Couche de protection supérieure | C | 0,8 | 0,8 | - |
| Couche de protection inférieure | TiOx | 3 | 1,5 | 1,5 |
| Revêtement antireflet | Si₃N₄ | 35 | 35 | 35 |
| | ZnO | - | 5 | 5 |
| Couche blocage OB | NiCr | 0,4 | 0,7 | 0,7 |
| Couche fonctionnelle | Ag | 7 | 10 | 10 |
| Couche blocage UB | NiCr | 0,7 | 0,7 | 0,7 |
| Revêtement antireflet | ZnO | - | 5 | 5 |
| | Si₃N₄ | 35 | 30 | 30 |
| Substrat (mm) | verre | 4 | 4 | 4 |

Afin d'évaluer la résistance mécanique de l'empilement différents tests ont été réalisés sur le matériau selon l'invention :
- Test à la laine d'acier (« steel wool »),
- Test « harp test ».

Le test à la laine d'acier (« steel wool ») et le « harp test » sont deux tests qui consistent à effectuer volontairement des rayures à la surface du matériau sur le côté de l'empilement.

Le test à la laine d'acier consiste à effectuer un certain nombre d'aller-retours en frottant, avec un morceau de laine d'acier, le matériau revêtu du côté de l'empilement, avec une pression constante.

Le « harp test » a pour objectif de simuler les conditions de frottement auxquelles un substrat revêtu d'un empilement peut être soumis dans un charriot à harpe. Ce test consiste à frotter le matériau revêtu du côté de l'empilement avec une corde provenant d'un charriot à harpe.

Ces deux tests ont été faits sur des substrats non nettoyés et sur des substrats nettoyés. Les substrats nettoyés subissent, après réalisation des rayures, une étape de nettoyage consistant en plusieurs passages en machine à laver.

Les substrats sont ensuite trempés par exemple pendant 5 minutes à 650 °C. Puis, on apprécie visuellement l'état du matériau.

On attribue une notation en fonction de la graduation suivante :
- 1 : verre pas ou très peu rayé (0 à 5 rayures),
- 2 : verre peu rayé (jusqu'à 20 rayures),
- 3 : verre assez rayé (jusqu'à 50 rayures),
- 4 : verre très rayé (nombre de rayures supérieur à 50).

| **Exemple** | **Test** | **Sans nettoyage** | **Avec nettoyage** |
|---|---|---|---|
| **Comp.** | Steel Wool | 4 | 4 |
| | Harp | 3 | 3 |
| **Inv.2** | Steel Wool | 1 | 1 |
| | Harp | 1 | 1 |

Le matériau selon l'invention satisfait à chacun de ces tests et donne du point de vue de la résistance à la rayure d'excellents résultats. De plus, l'étape de lavage ne modifie pas les bonnes propriétés de résistance à la rayure obtenue.

## Revendications

1. Matériau comprenant un substrat transparent en verre ou en polymère revêtu d'un empilement de couches minces agissant sur le rayonnement infrarouge comprenant au moins une couche fonctionnelle déposée entre des revêtements à base de matériaux diélectriques, la couche fonctionnelle est choisie parmi :
une couche fonctionnelle métallique à base d'argent ou d'un alliage métallique contenant de l'argent,
une couche fonctionnelle métallique à base de niobium,
une couche fonctionnelle à base de nitrure de niobium,
**caractérisé en ce que** :
- l'empilement comprend une couche de protection supérieure à base de carbone au sein de laquelle les atomes de carbone sont essentiellement dans un état d'hybridation sp2, la couche de protection supérieure est déposée au-dessus d'au moins une partie de la couche fonctionnelle et présente une épaisseur inférieure à 1 nm,
- le substrat transparent revêtu de l'empilement n'est pas traité thermiquement.

2. Matériau selon la revendication 1, **caractérisé en ce qu'**il est non trempé.

3. Matériau selon l'une des revendications précédentes **caractérisé en ce que** l'empilement comprend en outre une couche de protection inférieure à base de métaux choisis parmi le titane, le zinc, l'étain, le zirconium et/ou le hafnium, ces métaux étant sous forme métallique, oxydée, nitrurée ou oxynitrurée.

4. Matériau selon la revendication 3 **caractérisé en ce que** la couche de protection inférieure est choisie parmi une couche :
- de titane ; de zirconium ; d'hafnium ; de titane et de zirconium ; de titane, de zirconium et d'hafnium ; de zinc et d'étain ;
- de nitrure de titane ; de nitrure de zirconium ; de nitrure d'hafnium ; de nitrure de titane et de zirconium ; de nitrure de titane, de zirconium et d'hafnium ;
- d'oxyde de titane ; d'oxyde de zirconium ; d'oxyde d'hafnium ; d'oxyde de titane et de zirconium ; d'oxyde de titane, de zirconium et d'hafnium ; d'oxyde de zinc et d'étain.

5. Matériau selon la revendication 3 ou 4 **caractérisé en ce que** la couche de protection inférieure a une épaisseur :
- inférieure ou égale à 4 nm, et/ou
- supérieure ou égale à 1 nm.

6. Matériau selon l'une quelconque des revendications précédentes **caractérisé en ce que** la couche de protection supérieure a une épaisseur comprise entre 0,2 et 0,8 nm.

7. Matériau selon l'une quelconque des revendications précédentes, **caractérisé en ce que** l'empilement comprend une couche diélectrique à base de nitrure de silicium et/ou d'aluminium située au-dessus d'au moins une partie de la couche fonctionnelle.

8. Matériau selon la revendication 7 **caractérisé en ce que** la couche diélectrique à base de nitrure de silicium et/ou d'aluminium a une épaisseur :
- inférieure ou égale à 50 nm, et/ou
- supérieure ou égale à 20 nm

9. Matériau selon la revendication 7 ou 8 **caractérisé en ce que** la couche diélectrique à base de nitrure de silicium et/ou d'aluminium est en-dessous de la couche de protection inférieure et au-contact de la couche de protection inférieure.

10. Matériau selon l'une quelconque des revendications précédentes **caractérisé en ce que** l'empilement de couches minces comprend au moins une couche métallique fonctionnelle à base d'argent, au moins deux revêtements à base de matériaux diélectriques, chaque revêtement comportant au moins une couche diélectrique, de manière à ce que chaque couche métallique fonctionnelle soit disposée entre deux revêtements à base de matériaux diélectriques.

11. Matériau selon l'une quelconque des revendications 9 ou 10 **caractérisé en ce que** l'empilement comprend au moins une couche de blocage située en-dessous et au-contact d'une couche métallique fonctionnelle à base d'argent et/ou au moins une couche de blocage située au-dessus et au-contact d'une couche métallique fonctionnelle à base d'argent, la ou les couches de blocage sont à base d'un métal choisi parmi le niobium Nb, le tantale Ta, le titane Ti, le chrome Cr ou le nickel Ni ou à base d'un alliage obtenu à partir d'au moins deux de ces métaux.

12. Matériau selon l'une quelconque des revendications 9 à 11, **caractérisé en ce que** l'empilement comprend :
- un revêtement à base de matériaux diélectriques situé en-dessous de la couche métallique fonctionnelle à base d'argent, le revêtement comprenant au moins une couche diélectrique à base de nitrure de silicium et/ou d'aluminium,
- éventuellement une couche de blocage,
- une couche métallique fonctionnelle à base d'argent,
- éventuellement une couche de blocage,
- un revêtement à base de matériaux diélectriques situé au-dessus de la couche métallique fonctionnelle à base d'argent, le revêtement comprenant au moins une couche diélectrique à base de nitrure de silicium et/ou d'aluminium,
- éventuellement une couche de protection inférieure,
- une couche de protection supérieure.

13. Matériau selon l'une quelconque des revendications précédentes tel que le substrat transparent est :
- en verre silico-sodo-calcique ou
- en polyéthylène, en polyéthylène téréphtalate ou en polyéthylène naphtalate.

14. Utilisation d'un matériau, selon l'une des revendications 1 à 13, pour fabriquer un vitrage.

## Patentansprüche

1. Material, umfassend ein transparentes Substrat aus Glas oder aus Polymer, das mit einem Stapel dünner, auf Infrarotstrahlung wirkender Schichten beschichtet ist, umfassend mindestens eine Funktionsschicht, die zwischen Beschichtungen auf Basis dielektrischer Materialien abgeschieden ist, wobei die Funktionsschicht ausgewählt ist aus:
einer metallischen Funktionsschicht auf Basis von Silber oder einer silberhaltigen metallischen Legierung,
einer metallischen Funktionsschicht auf Basis von Niob,
einer Funktionsschicht auf Basis von Niobnitrid,
**dadurch gekennzeichnet, dass:**
- der Stapel eine obere Schutzschicht auf Basis von Kohlenstoff umfasst, in der die Kohlenstoffatome sich im Wesentlichen in einem sp2-Hybridisierungszustand befinden, wobei die obere Schutzschicht über mindestens einem Teil der Funktionsschicht abgeschieden ist und eine Dicke von kleiner als 1 nm besitzt,
- das transparente Substrat, das mit dem Stapel beschichtet ist, nicht wärmebehandelt ist.

2. Material nach Anspruch 1, **dadurch gekennzeichnet, dass** es ungehärtet ist.

3. Material nach einem der vorstehenden Ansprüche,
**dadurch gekennzeichnet, dass** der Stapel ferner eine untere Schutzschicht auf Basis von Metallen, die aus Titan, Zink, Zinn, Zirkonium und/oder Hafnium ausgewählt sind, umfasst, wobei diese Metalle in metallischer, oxidierter, nitrierter oder oxynitrierter Form vorliegen.

4. Material nach Anspruch 3, **dadurch gekennzeichnet, dass** die untere Schutzschicht aus einer Schicht ausgewählt ist aus:
- Titan; Zirkonium; Hafnium; Titan und Zirkonium; Titan, Zirkonium und Hafnium; Zink und Zinn;
- Titannitrid; Zirkoniumnitrid; Hafniumnitrid; Titan- und Zirkoniumnitrid, Titan-, Zirkonium- und Hafniumnitrid;
- Titanoxid; Zirkoniumoxid; Hafniumoxid; Titan- und Zirkoniumoxid; Titan-, Zirkonium- und Hafniumoxid; Zink- und Zinnoxid.

5. Material nach Anspruch 3 oder 4, **dadurch gekennzeichnet, dass** die untere Schutzschicht eine Dicke aufweist von:
- kleiner als oder gleich 4 nm und/oder
- größer als oder gleich 1 nm.

6. Material nach einem der vorstehenden Ansprüche,
**dadurch gekennzeichnet, dass** die höhere Schutzschicht eine Dicke zwischen 0,2 und 0,8 nm aufweist.

7. Material nach einem der vorstehenden Ansprüche,
**dadurch gekennzeichnet, dass** der Stapel eine dielektrische Schicht auf Basis von Silizium- und/oder Aluminiumnitrid umfasst, die sich über mindestens einem Teil der Funktionsschicht befindet.

8. Material nach Anspruch 7, **dadurch gekennzeichnet, dass** die dielektrische Schicht auf Basis von Silizium- und/oder Aluminiumnitrid eine Dicke aufweist:
- kleiner als oder gleich 50 nm und/oder
- größer als oder gleich 20 nm.

9. Material nach Anspruch 7 oder 8, **dadurch gekennzeichnet, dass** die dielektrische Schicht auf Basis von Silizium- und/oder Aluminiumnitrid unter der unteren Schutzschicht liegt und mit der unteren Schutzschicht in Kontakt steht.

10. Material nach einem der vorstehenden Ansprüche,
**dadurch gekennzeichnet, dass** der Stapel dünner Schichten mindestens eine metallische Funktionsschicht auf Basis von Silber, mindestens zwei Beschichtungen auf Basis dielektrischer Materialien umfasst, wobei jede Beschichtung mindestens eine dielektrische Schicht vorweist, sodass jede metallische Funktionsschicht zwischen zwei Beschichtungen auf Basis dielektrischer Materialien angeordnet ist.

11. Material nach einem der Ansprüche 9 oder 10,
**dadurch gekennzeichnet, dass** der Stapel mindestens eine Sperrschicht, die sich unter einer metallischen Funktionsschicht auf Silberbasis befindet und mit dieser in Kontakt steht, und/oder mindestens eine Sperrschicht umfasst, die sich über einer metallischen Funktionsschicht auf Silberbasis befindet und mit dieser in Kontakt steht, wobei die eine oder die mehreren Sperrschichten auf einem Metall basieren, das aus Niob Nb, Tantal Ta, Titan Ti, Chrom Cr oder Nickel Ni ausgewählt ist, oder auf einer Legierung basieren, die aus mindestens zwei dieser Metalle gewonnen wird.

12. Material nach einem der Ansprüche 9 bis 11,
**dadurch gekennzeichnet, dass** der Stapel umfasst:
- eine Beschichtung auf Basis dielektrischer Materialien, die sich unter der metallischen Funktionsschicht auf Basis von Silber befindet, die Beschichtung umfassend mindestens eine dielektrische Schicht auf Basis von Silizium- und/oder Aluminiumnitrid,
- gegebenenfalls eine Sperrschicht,
- eine metallische Funktionsschicht auf Basis von Silber,
- gegebenenfalls eine Sperrschicht,
- eine Beschichtung auf Basis dielektrischer Materialien, die sich über der metallischen Funktionsschicht auf Basis von Silber befindet, die Beschichtung umfassend mindestens eine dielektrische Schicht auf Basis von Silizium- und/oder Aluminiumnitrid,
- gegebenenfalls eine untere Schutzschicht,
- eine obere Schutzschicht.

13. Material nach einem der vorstehenden Ansprüche, wobei das transparente Substrat besteht aus:
- Kalknatronsilikatglas oder
- Polyethylen, Polyethylenterephthalat oder Polyethylennaphthalat.

14. Verwendung eines Materials nach einem der Ansprüche 1 bis 13 zum Herstellen einer Verglasung.

## Claims

1. A material comprising a transparent substrate made of glass or polymer coated with a stack of thin layers acting on infrared radiation comprising at least one functional layer deposited between coatings based on dielectric materials, the functional layer is chosen from:
a functional metal layer based on silver or on a silver-containing metal alloy,
a functional metal layer based on niobium,
a functional layer based on niobium nitride,
**characterized in that**
- the stack comprises a carbon-based upper protective layer within which the carbon atoms are essentially in an sp² hybridization state, the upper protective layer is deposited above at least a part of the functional layer and exhibits a thickness of less than 1 nm,
- the transparent substrate coated with the stack is not heat treated.

2. The material as claimed in claim 1,**characterized in that** it is untempered.

3. The material as claimed in one of the preceding claims, **characterized in that** the stack additionally comprises a lower protective layer based on metals chosen from titanium, zinc, tin, zirconium and/or hafnium, these metals being in the metal, oxidized, nitrided or oxynitrided form.

4. The material as claimed in claim 3, **characterized in that** the lower protective layer is chosen from a layer:
- of titanium; of zirconium; of hafnium; of titanium and of zirconium; of titanium, of zirconium and of hafnium; of zinc and of tin;
- of titanium nitride; of zirconium nitride; of hafnium nitride; of titanium and zirconium nitride; of titanium, zirconium and hafnium nitride;
- of titanium oxide; of zirconium oxide; of hafnium oxide; of titanium and zirconium oxide; of titanium, zirconium and hafnium oxide; of zinc and tin oxide.

5. The material as claimed in claim 3 or 4, **characterized in that** the lower protective layer has a thickness:
- of less than or equal to 4 nm, and/or
- of greater than or equal to 1 nm.

6. The material as claimed in any one of the preceding claims, **characterized in that** the upper protective layer has a thickness of between 0.2 and 0.8 nm.

7. The material as claimed in any one of the preceding claims, **characterized in that** the stack comprises a dielectric layer based on silicon and/or aluminum nitride located above at least a part of the functional layer.

8. The material as claimed in claim 7, **characterized in that** the dielectric layer based on silicon and/or aluminum nitride has a thickness:
- of less than or equal to 50 nm, and/or
- of greater than or equal to 20 nm.

9. The material as claimed in claim 6 or 7, **characterized in that** the dielectric layer based on silicon and/or aluminum nitride is below the lower protective layer and in contact with the lower protective layer.

10. The material as claimed in any one of the preceding claims, **characterized in that** the stack of thin layers comprises at least one silver-based functional metal layer and at least two coatings based on dielectric materials, each coating comprising at least one dielectric layer, so that each functional metal layer is positioned between two coatings based on dielectric materials.

11. The material as claimed in either one of claims 9 and 10, **characterized in that** the stack comprises at least one blocking layer located below and in contact with a silver-based functional metal layer and/or at least one blocking layer located above and in contact with a silver-based functional metal layer; the blocking layer or layers are based on a metal chosen from niobium Nb, tantalum Ta, titanium Ti, chromium Cr or nickel Ni or based on an alloy obtained from at least two of these metals.

12. The material as claimed in any one of claims 9 to 11, **characterized in that** the stack comprises:
- a coating based on dielectric materials located below a silver-based functional metal layer, the coating comprising at least one dielectric layer based on silicon and/or aluminum nitride,
- optionally a blocking layer,
- a silver-based functional metal layer,
- optionally a blocking layer,
- a coating based on dielectric materials located above the silver-based functional metal layer, the coating comprising at least one dielectric layer based on silicon and/or aluminum nitride,
- optionally a lower protective layer,
- an upper protective layer.

13. The material as claimed in any one of the preceding claims, such that the transparent substrate is:
- made of soda-lime-silica glass, or
- made of polyethylene, of polyethylene terephthalate or of polyethylene naphthalate.

14. The use of a material as claimed in one of claims 1 to 13 for manufacturing a glazing.
